# FASCICULE DE BREVET EUROPEEN

(11) **EP 0 343 061 B1**
(45) Date de publication et mention de la délivrance du brevet: **10.03.1993**
(21) Numéro de dépôt: 89401352.3
(22) Date de dépôt: 16.05.1989
(51) Int. Cl.: B01D 50/00, B01D 46/04

(54) **Cyclofiltre à cartouche filtrante**
Rundfilter mit Filtereinsatz
Circular filter with filter cartridge

(30) Priorité: 18.05.1988 FR 8806830
(43) Date de publication de la demande: 23.11.1989
(73) Titulaire: SOCIETE CATTINAIR, 25150 Pont-de-Roide (FR)
(72) Inventeur: Cattin, Gabriel, F-25150 Pont de Roide (FR)
(74) Mandataire: Phélip, Bruno

(56) Documents cités:
- WO-A-83/03556
- AT-B- 359 468
- FR-A- 2 514 669
- US-A- 3 648 442

## Description

La présente invention concerne un procédé de filtration d'air dans un appareil connu sous le nom de cyclofiltre ; elle concerne également l'appareil, c'est-à-dire le cyclofiltre et la cartouche filtrante qui permettent la mise en oeuvre du procédé

Un exemple de ce type d'appareil est décrit dans le document FR-A-2.514.669 de la demanderesse. Ces appareils sont notamment destinés à extraire les éléments en suspension dans l'air puisé dans des locaux de production, de traitement ou de stockage de produits pulvérulents, ou de certaines industries entraînant l'émission de déchets comme par exemple des copeaux ou sciures très volatiles.

Ces appareils sont constitués de trois éléments principaux généralement centrés sur un même axe vertical :
- un corps supérieur, cylindrique ou conique, dans lequel s'effectue, d'une manière tangentielle, l'arrivée de l'air à dépoussiérer,
- une chambre de sédimentation disposée sous le corps supérieur ; cette chambre étant soit en forme d'entonnoir, soit de forme cylindrique ; elle est munie de moyens de reprise des déchets à sa partie inférieure,
- une cartouche filtrante constituée de manches de filtration tendues verticalement entre ladite chambre de sédimentation et la coiffe de l'appareil où est évacué l'air filtré.

L'épuration de l'air s'effectue en deux temps. Tout d'abord, les poussières les plus lourdes sont séparées par centrifugation cyclonique et tombent directement dans la chambre de sédimentation ; les poussières résiduelles en suspension dans l'air, qui représentent environ 20 % du total, sont retenues dans la cartouche filtrante et en particulier sur les manches verticales. Ces manches sont généralement réalisées en matériau du genre feutre aiguilleté. La qualité du filtrage est fonction du matériau utilisé pour le filtre, mais aussi de son état et de la vitesse de passage de l'air. Au cours de son utilisation, le filtre se charge progressivement, les pores se colmatent, créant ainsi un freinage qui se traduit au niveau du ventilateur d'aspiration de l'air, par une chute de débit. Ces appareils sont généralement équipés, comme décrit dans le document précité, d'un dispositif de décolmatage automatique qui permet une régénération des filtres. Ce décolmatage s'effectue depuis la coiffe d'aspiration au moyen de jets d'air comprimé ou autres, circulant à contre courant et qui repoussent, pour chaque manche de filtration, les poussières qui s'accumulent en surface, à l'extérieur desdites manches. La fréquence du décolmatage est réglée le plus souvent au moyen d'un programmateur cyclique. Les particules décollées des manches tombent normalement dans la trémie inférieure.

D'autres appareils de ce type sont décrits par exemple dans le document US-A-3.648.442. Les manches filtrantes s'étendent verticalement dans le corps du cyclofiltre et sont entourées, sur une partie de leur hauteur, par une jupe dont le rôle est de masquer l'arrivée de l'air chargé. Ces manches filtrantes ne font pas partie, à proprement parlé, d'une cartouche spécifique associée au corps du cyclofiltre.

Dans un tel appareil, la partie inférieure des manches se "sable" assez rapidement.

Dans le document FR-A-2.514.669, précité, la cartouche filtrante comporte une enveloppe cylindrique qui s'étend verticalement sur toute la hauteur des manches de filtration, et cette cartouche est ouverte à ses deux extrémités : l'extrémité inférieure de la cartouche se situant au-dessus de la chambre de sédimentation, est ouverte sur l'extérieur des manches ; l'extrémité supérieure se situant dans la coiffe de l'appareil est ouverte sur l'intérieur desdites manches. L'air chargé pénètre à la partie inférieure de la cartouche filtrante, il remonte par aspiration dans cette cartouche, autour des manches et, après avoir traversé lesdites manches, il est évacué à la partie supérieure de ladite cartouche, appelée coiffe.

Lors du décolmatage, les particules décollées de la surface des manches, tombent normalement par gravité ; elles descendent plus ou moins vite en fonction de la vitesse ascensionnelle de l'air à dépoussiérer qui monte entre les manches de filtration ; elles sont donc freinées par la remontée de l'air dans la cartouche entre lesdites manches. Le décolmatage s'effectuant manche par manche ou par groupe de manches, les particules qui sont éjectées d'une manche et qui sont gênées par la vitesse ascensionnelle de l'air entre les manches, se collent sur la manche aspirante voisine.

On retrouve ce même phénomène pour l'appareil décrit dans le document US-A-3.648.442 précité. Les manches, dans cet appareil, ne sont enveloppées que sur une partie de leur hauteur ; leur partie inférieure se "sable" rapidement. La vitesse ascensionnelle de l'air au niveau de la partie inférieure de la virole devient très vite trop importante pour permettre la chute des poussières libérées de la surface des manches lors de l'opération de décolmatage.

En fait, plus la vitesse ascensionnelle de l'air à l'entrée de la cartouche filtrante est importante, moins les particules décollées peuvent descendre entre les manches ; ces dernières se colmatent encore plus du fait de la présence des particules décollées, ce qui a pour effet d'obliger l'air à remonter plus haut entre les manches avant de traverser leur paroi et ainsi de maintenir sur une hauteur plus importante la vitesse introductive de l'air dans la cartouche.

La présente invention vise à remédier à ces inconvénients.

Elle concerne un cyclofiltre à cartouche filtrante selon la revendication 1 et une cartouche filtrante selon la revendication 6.

Le cyclofiltre selon l'invention est muni d'une cartouche qui comporte, dans sa partie basse, des moyens de réduction de la vitesse ascensionnelle de l'air à dépoussiérer, lesquels moyens sont disposés au niveau de la partie amont des manches de filtration et offrent, pour le passage de l'air à dépoussiérer, une surface qui est supérieure à la surface de la section disponible entre lesdites manches dans la partie supérieure de la cartouche.

Ces moyens consistent en une multitude de perforations réalisées dans la jupe, dans sa partie située à l'intérieur du corps du cyclofiltre.

Selon une variante, la jupe de forme cylindrique, comporte une partie pleine disposée devant l'arrivée de l'air à dépoussiérer et une partie perforée sur le reste du pourtour.

Dans l'un et l'autre cas, la jupe perforée permet une entrée d'air sur la périphérie de la cartouche, dans sa partie située à l'intérieur du corps ; cette entrée d'air périphérique réduit la vitesse de l'air au niveau de l'entrée basse de la jupe ; par ailleurs, une telle jupe perforée constitue un filtre à choc qui améliore la séparation des particules en suspension dans l'air, sans altérer le caractère cyclonique de l'appareil.

L'invention sera encore illustrée à l'aide de la description suivante et des dessins annexés, donnés à titre indicatif, et dans lesquels :
- la figure 1 illustre un premier mode de réalisation de l'invention,
- la figure 2 est une section selon 3 de la figure 1,

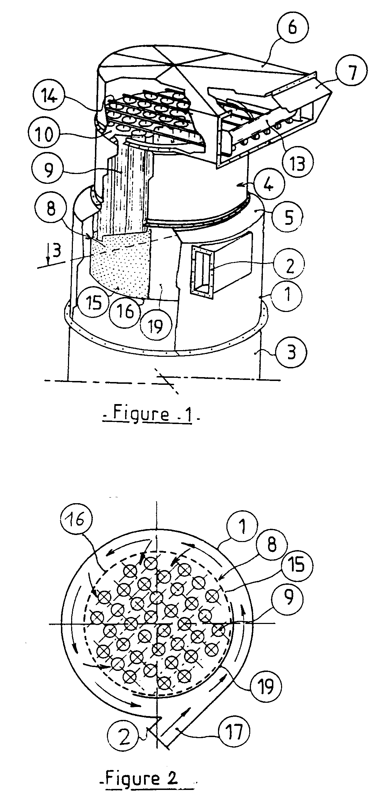

L'appareil représenté figure 1 est un appareil du type cyclofiltre à décolmatage automatique.

L'appareil comporte :
- un corps supérieur 1 en forme de virole cylindrique, comportant une arrivée tangentielle 2 de l'air à dépoussiérer ;
- une chambre de sédimentation 3 dont le contour, figure 1, est cylindrique ; cette chambre de sédimentation est disposée dans le prolongement et sous le corps supérieur 1 ; elle comporte à sa partie basse, non représentée, des moyens de reprise des particules et poussières qui s'y déposent ;
- une cartouche filtrante 4 solidaire du corps supérieur 1 au moyen d'une collerette annulaire 5.

Ces différents éléments constituant l'appareil sont de forme circulaire, centrés sur un axe vertical et la cartouche filtrante 4 s'étend sensiblement pour moitié : dans le corps supérieur 1 et au-dessus de ce corps 1, fixée par la collerette 5. La partie supérieure de la cartouche filtrante est constituée d'une coiffe 6 munie d'une buse 7 d'évacuation de l'air filtré ; elle renferme le dispositif de décolmatage automatique dont il sera question plus loin.

La cartouche filtrante 4 est constituée, d'une manière générale, d'une paroi ou enveloppe cylindrique 8. A l'intérieur de cette enveloppe 8, on trouve des manches de filtrage 9, disposées verticalement et tendues entre une plaque à trous 10, disposée à la partie supérieure de l'enveloppe 8, au niveau de la coiffe 6, et, par exemple, une grille 11, située au-dessus de la chambre de sédimentation, maintenue par des tiges verticales 12 solidaires de la plaque à trous 10. Dans d'autres dispositifs, les manches filtrantes peuvent être suspendues verticalement et maintenues par des cages en fil métallique.

Dans la coiffe 6, au-dessus de la plaque à trous 10, on trouve un système de décolmatage automatique 13 constitué par exemple de plusieurs rampes fixes 14 qui injectent de l'air comprimé, dans les manches verticales 9, de façon à provoquer un décollement des particules de poussière agglutinées sur la surface externe des manches 9.

On a représenté, figure 1, des moyens qui permettent de réduire la vitesse ascensionnelle de l'air à l'entrée de la cartouche filtrante 4. Ces moyens consistent en des perforations 15 réalisées dans la partie basse de l'enveloppe 8 de la cartouche 4, située dans le corps 1. Cette partie basse de l'enveloppe 8 est en forme de jupe 16.

Les trous, ou perforations 15, sont régulièrement répartis sur la jupe 16 de l'enveloppe 8. Leur diamètre est fonction du type de poussières rencontrées. Ces trous 15 constituent également un étage supplémentaire de filtration et notamment une filtration à choc.

On remarque figure 2, un écran 19 interposé entre l'entrée 17 du corps supérieur 1 et la partie interne 18 de la cartouche filtrante comprenant les manches verticales 9. Cet écran 19 s'étend sur un secteur circulaire depuis l'entrée de l'air à dépoussiérer jusqu'au quart ou au tiers environ de la circonférence de la cartouche 4. Le but de cet écran 19 est de protéger la partie basse des manches disposées dans la zone d'arrivée de l'air à dépoussiérer contre des détériorations de toute sorte dues aux particules en suspension dans l'air.

Cet écran 19 peut être constitué par la jupe 16 de l'enveloppe 8, partiellement perforée sur un secteur cylindrique faisant les 2/3 ou les 3/4 du pourtour total de l'enveloppe. 8.

L'écran 19 sera de dimension variable selon la nature des poussières à filtrer.

Cet écran pourra être totalement supprimé selon la nature des poussières.

On a représenté, figure 3, sous la forme d'une section horizontale, la cartouche filtrante 4 dont la jupe 16 est perforée d'une multitude de trous 15 ; un écran 19 masque une partie des trous 15 de la jupe 16 au niveau de l'arrivée de l'air à dépoussiérer. Cet écran 19, en forme de secteur cylindrique, est fixé à la collerette annulaire 15 ; il s'étend sur toute la hauteur de la partie inférieure de la jupe 16, à l'intérieur du corps supérieur 1. Ceci permet en particulier de s'affranchir d'un problème de positionnement de la cartouche par rapport à l'arrivée de l'air à dépoussiérer.

Du fait de la présence des perforations 15 de la jupe 16 à la partie basse de la cartouche, l'air poussiéreux arrive radialement sur la partie basse des manches, sur une hauteur variable pouvant correspondre,dans certaines dispositions à 1/3 ou la moitié de la hauteur desdites manches 9 . La partie basse 16 de la cartouche, c'est-à-dire la partie amont des manches filtrantes 9, comporte, pour l'introduction de l'air, une ouverture dont la surface est supérieure à la section de passage de l'air dans la partie supérieure de ladite cartouche, c'est-à-dire dans la partie aval des manches 9. Cette surface est plus ou moins importante selon le type de poussières et déchets à éliminer.

On obtient ainsi une réduction notable de la vitesse ascensionnelle de l'air dans la cartouche filtrante, cette réduction est de l'ordre de la moitié. A titre d'exemple, on peut obtenir pour des appareils courants, avec une enveloppe dont la jupe est perforée, des vitesses ascensionnelles, de l'ordre de 1,7 m/seconde. Dans le cas d'une enveloppe non perforée, c'est-à-dire avec une introduction de l'air simplement par la partie basse de la cartouche, les vitesses sont de l'ordre de 3,5 à 4 m par seconde.

On obtient ainsi une meilleure efficacité des filtres et surtout la possibilité de fonctionner avec une perte de charge réduite de plus de 50 % pour un débit de l'ordre de 250 m³/heure et par m² de surface filtrante. A titre indicatif, pour un appareil courant, la perte de charge peut atteindre 200 mm de colonne d'eau pour un débit de 180 m³ / heure et par m² de surface filtrante.

Toujours à titre d'exemple, pour de l'air chargé de poussières et déchets de bois de menuiserie, avec une concentration de l'ordre de 50 g par m³ d'air, la jupe comporte des trous 15 ayant un diamètre de l'ordre de 10 mm et ces trous sont disposés de façon à occuper environ 50 % de la surface totale de la jupe 16.

Comme il a été dit précédemment, le rendement et la tenue des filtres sont nettement améliorés ainsi que le rendement global de l'installation du fait d'une consommation d'énergie moindre.

Les signes de référence insérés après les caractéristiques techniques mentionnées dans les revendications ont pour seul but de faciliter la compréhension de ces dernières.

## Revendications

1. Cyclofiltre à cartouche filtrante, du type muni d'un dispositif de décolmatage automatique et constitué :
- d'un corps supérieur (1) à axe vertical comportant une arrivée tangentielle (2) de l'air à filtrer,
- d'une chambre de sédimentation (3) disposée sous ledit corps supérieur (1),
- d'une cartouche filtrante (4) dont la partie basse est située à l'intérieur dudit corps supérieur (1), laquelle cartouche filtrante (4) est équipée de manches de filtration (9) tendues verticalement entre la chambre de sédimentation (3) et une coiffe (6) où est évacué l'air filtré, laquelle coiffe (6) renferme le dispositif de décolmatage automatique (13) desdites manches (9), la partie inférieure des manches (9), située dans le corps supérieur (1) étant entourée par une jupe (16) qui s'étend sensiblement jusqu'en bas desdites manches, caractérisé en ce que la jupe (16) est munie d'une multitude de perforations ou trous (15) destinés à faciliter la circulation de l'air autour des manches filtrantes (9).

2. Cyclofiltre à cartouche filtrante selon la revendication 1 caractérisé en ce qu'il comporte une jupe (16) perforée sur un secteur cylindrique de l'ordre des 2/3, des 3/4 ou de la totalité de son pourtour, selon la caractéristique des produits à filtrer.

3. Cyclofiltre à cartouche filtrante selon l'une quelconque des revendications 1 ou 2, caractérisé en ce qu'il comporte un écran (19) disposé devant l'arrivée tangentielle de l'air à dépoussiérer, constituant une protection de la jupe (16).

4. Cyclofiltre à cartouche filtrante selon la revendication 3, caractérisé en ce qu'il comporte un écran (19) qui couvre un secteur compris entre le 1/4 et le 1/3 de la circonférence de la cartouche filtrante (4).

5. Cartouche filtrante pour cyclofiltre selon l'une quelconque des revendications 1 à 4, laquelle cartouche est constituée d'une enveloppe cylindrique (8) à l'intérieur de laquelle on trouve les manches de filtration (9) surmontées par une coiffe (6) où est évacué l'air filtré et qui renferme le dispositif de décolmatage automatique (13), la partie basse desdites manches (9) étant entourée par une jupe (16) qui s'étend sensiblement jusqu'à leur niveau inférieur, caractérisée en ce que la jupe (16) est munie d'une multitude de perforations ou trous (15) destinés à faciliter la circulation de l'air autour des manches filtrantes (9).

6. Cartouche filtrante selon la revendication 5, caractérisée en ce que la jupe (16) est perforée sur un secteur cylindrique de l'ordre des 2/3, des 3/4 ou de la totalité de son pourtour, selon la caractéristique des produits à filtrer.

## Patentansprüche

1. Rundfilter mit Filtereinsatz mit automatischer Reinigung des Staubfilters, bestehend aus:
- einem oberen Gehäuseteil (1) mit vertikaler Achse und mit einem tangentialen Einlauf (2) für die zu filtrierende Luft,
- einer unter dem oberen Gehäuseteil (1) angeordnete Sedimentationskammer (3),
- einem Filtereinsatz (4), dessen unterer Abschnitt im Inneren des oberen Gehäuseteils (1) angeordnet ist, wobei der Filtereinsatz (4) mit Filtrierschläuchen (9) ausgerüstet ist, die vertikal zwischen der Sedimentationskammer (3) und einem Deckelteil (6) gespannt ist, aus dem die filtrierte Luft evakuiert wird, wobei der Deckelteil (6) die Vorrichtung (13) zur automatischen Reinigung der genannten Schläuche (9) enthält und der untere Abschnitt der Schläuche (9) im oberen Gehäuseteil (1) von einer Schürze (16) umgeben ist, die sich im wesentlichen bis zum unteren Ende der Schläuche erstreckt, dadurch gekennzeichnet, daß die Schürze (16) mit einer Vielzahl von zur Erleichterung der Zirkulation der Luft um die Filtrierschläuche (9) dienenden Perforationen oder Löchern (15) versehen ist.

2. Rundfilter mit Filtereinsatz nach Anspruch 1, dadurch gekennzeichnet, daß er eine Schürze (16) umfaßt, die je nach der Charakteristik der zu filtrierenden Produkte auf einem zylindrischen Sektor in der Größenordnung von 2/3, 3/4 oder der Gesamtheit ihres Umfangs perforiert ist.

3. Rundfilter mit Filtereinsatz nach Anspruch 1 oder 2, dadurch gekennzeichnet, daß er einen Schirm (19) umfaßt, der vor dem tangentialen Einlauf der zu entstaubenden Luft angeordnet ist und einen Schutz für die Schürze (16) bildet.

4. Rundfilter mit Filtereinsatz nach Anspruch 3, dadurch gekennzeichnet, daß er einen Schirm (19) umfaßt, der einen Sektor zwischen 1/4 und 1/3 des Umfangs des Filtereinsatzes überdeckt.

5. Filtereinsatz für einen Rundfilter nach einem der Ansprüche 1 bis 4, der aus einer zylindrischen Hülle (8) gebildet ist, in dessen Innerem sich die Filtrierschläuche (9) befinden und der durch ein Deckelteil (6) überdeckt ist, aus dem die filtrierte Luft austritt und der die automatische Staubfilterreinigungsvorrichtung (13) enthält, wobei der untere Abschnitt der Schläuche (9) von einer Schürze (16) umgeben ist, die sich im wesentlichen bis zu deren unterem Niveau erstreckt, dadurch gekennzeichnet, daß die Schürze (16) mit einer Vielzahl von der Erleichterung der Zirkulation der Luft um die Filterschläuche (9) dienenden Perforationen oder Löchern (15) versehen ist.

6. Filtereinsatz nach Anspruch 5, dadurch gekennzeichnet, daß die Schürze (16) auf einem zylindrischen Sektor der Größenordnung von 2/3, 3/4 oder der Gesamtheit ihres Umfangs, je nach der Charakteristik der zu filtrierenden Produkte, perforiert ist.

## Claims

1. A cyclone filter with filter cartridge of the type provided with an automatic unclogging device and consisting :
- of an upper body (1) with a vertical axis comprising a tangential inlet (2) for the air to be filtered,
- of a settling chamber (3) arranged below the said upper body (1),
- of a filter cartridge (4) the lower part of which is located inside the upper body (1), said filter cartridge (4) is provided with filtering sleeves (9) stretched vertically between the settling chamber (3) and a cover (6) where the filtered air is evacuated, which cover (6) closes the device (13) for automatically unclogging the said sleeves (9), the lower part of the sleeves (9) provided in the upper body (1) being surrounded by a skirt (16) which extends pratically up to the lower part of the sleeves, characterized in that the skirt (16) is provided with a plurality of holes (15) allowing the air circulation around the filtering sleeves (9).

2. A cyclone filter with filter cartridge according to claim 1 characterized in that it is provided with a skirt (16) perforated on a cylindrical sector corresponding to 2/3, 3/4 or the whole of the circumference thereof according to the characteristic of the filtered products.

3. A cyclone filter with filter cartridge according to either claim 1 or claim 2, characterized in that it comprises a screen (19) provided before the tangential air inlet to be de-dusted constituting a protection of the skirt (16).

4. A cyclone filter according to claim 3 characterized in that it comprises a screen (19) covering a sector corresponding to 1/4 and 1/3 of the circumference of the filter cartridge (4).

5. Filter cartridge for cyclone filter according to any one of the claims 1 to 4 said cartridge comprising a cylindrical casing (8) inside of which are provided filtering sleeves (9) closed by a cover (6) where the filtered air is discharged and which comprises the automatic unclogging device (13), the lower part of said sleeves (9) being surrounded by a skirt (16) which extends pratically up to the inferior level thereof, characterized in that the skirt (16) is provided with a plurality of holes (15 ) allowing the air circulation around the filtering sleeves (9).

6. Filter cartridge according to claim 5 characterized in that the skirt (16) is perforated on a cylindrical sector corresponding to 2/3, 3/4 or the whole of the circumference thereof according to the characteristic of the filtered products.
